# EUROPÄISCHE PATENTANMELDUNG

(11) **EP 2 446 993 A1**
(43) Veröffentlichungstag der Anmeldung: **02.05.2012**
(21) Anmeldenummer: 11183322.4
(22) Anmeldetag: 29.09.2011
(51) Int. Cl.: B23D 17/02, B23D 29/00

(54) **Schneidwerkzeug**

(30) Priorität: 29.10.2010 DE 202010014880 U
(71) Anmelder: Novopress GmbH Pressen und Presswerkzeuge & Co. KG, 41460 Neuss (DE)
(72) Erfinder: Reichel, Volker, 41464 Neuss (DE)
(74) Vertreter: von Kreisler Selting Werner

(57) **Zusammenfassung**

Ein Schneidwerkzeug, das insbesondere zur Erzeugung großer Schneidkräfte geeignet ist, weist zwei Hebelelemente (10, 12) auf. An den vorderen Enden (46) der Hebelelemente (10, 12) ist eine Schneidmesseraufnahme (48) zur Aufnahme von Schneidmessern (44) vorgesehen. An den hinteren Enden (72) der beiden Hebelelemente (10, 12) sind an der Innenseite Kraftübertragungsflächen (70) vorgesehen. Über die Kraftübertragungsflächen (70) erfolgt die Kraftübertragung von einer elektrischen und/oder hydraulischen Antriebseinrichtung auf die beiden Hebelelemente (10, 12). Die beiden Hebelelemente sind über einen Schwenkbolzen (26) schwenkbar miteinander verbunden. Unabhängig von dem Schwenkbolzen ist in einem Abstand zu diesem ein Aufnahmeelement (56) vorgesehen. Über das Aufnahmeelement (56) kann mit Hilfe eines Haltebolzens (14) ein Verbinden des Schneidwerkzeugs mit einer Werkzeugaufnahme (16) der Antriebseinrichtung (20) erfolgen.

## Beschreibung

Die Erfindung betrifft ein Schneidwerkzeug, insbesondere zur Erzeugung großer Schneidkräfte.

Aus DE 20 2006 009 273 ist ein Schneidwerkzeug bekannt, das mit Hilfe einer elektrohydraulischen Antriebseinrichtung betätigbar ist. Derartige elektrohydraulische Antriebseinrichtungen werden üblicherweise in der Rohr-Verpresstechnik eingesetzt. Zum Verpressen von Rohren sind mit derartigen Antriebseinrichtungen Pressbacken verbunden. Aufgrund des elektrohydraulischen Antriebs können hohe Kräfte aufgebracht werden. Bei dem in DE 20 2006 009 273 beschriebenen Schneidwerkzeug wird ein Schneidbackenpaar über einen Haltebolzen mit der Antriebseinrichtung verbunden. Der Haltebolzen wird hierzu durch zwei sich überdeckende Bohrungen in den Schneidbacken gesteckt. Gleichzeitig wird der Haltebolzen durch entsprechende Bohrungen in einer Werkzeugaufnahme der Antriebseinrichtung eingesteckt. Der Haltebolzen dient somit einerseits zum Fixieren der beiden das Schneidbackenpaar ausbildenden Hebelelemente in der Werkzeugaufnahme der Antriebseinrichtung, sowie gleichzeitig als Schwenkachse, um die die beiden Hebelelemente beim Schneiden verschwenkt werden. Die beiden Hebelelemente weisen an ihren vorderen von der Antriebseinrichtung wegweisenden Enden Schneidmesser auf. An den hinteren in Richtung der Antriebseinrichtung weisenden Enden der Hebelelemente sind Kraftübertragungsflächen vorgesehen. Die Kraftübertragungsflächen sind einander gegenüberliegend angeordnet und weisen aufeinander zu. Über Rollenköpfe oder andere Übertragungselemente erfolgt ein Übertragen der hydraulischen Kraft auf die beiden Kraftübertragungsflächen, so dass diese auseinander gedrückt werden. Durch das Auseinanderdrücken der hinteren Enden der beiden Hebelelemente werden die beiden vorderen Enden aufeinander zu bewegt, um das Schneiden durchzuführen. Bei einer elektrohydraulischen Antriebseinrichtung werden die beiden Rollenköpfe oder Übertragungselemente mit Hilfe einer Kolbenstange bewegt. Die Kolbenstange ist mit einem Antriebskolben verbunden, in der ein Hydraulikzylinder angeordnet ist. Über eine Hydraulikpumpe wird ein Hydraulikfluid dem Hydraulikzylinder zum Betätigen des Hydraulikkolbens zugeführt.

Bei insbesondere scherenartigen Schneidwerkzeugen, deren Schneidmesser sich beim Schneiden teilweise überdecken, ist zum Sicherstellen eines einwandfreien sauberen Schnitts ein geringes Spiel bzw. ein geringer Abstand zwischen den beiden Schneidmessern erforderlich. Bei dem in DE 20 2006 009 273 beschriebenen Schneidwerkzeug handelt es sich um eine Schneidzange, deren Schneiden sich beim Schneiden nicht überdecken. Vielmehr weist nur eines der beiden Hebelelemente eine Schneide auf, die gegen eine am anderen Hebelelement vorgesehene Anlagefläche oder einen Amboss drückt. Insofern ist das Vorsehen eines geringen Spiels bei diesem Schneidwerkzeug nicht erforderlich. Aufgrund der Befestigung der beiden Hebelelemente über einen Haltebolzen mit der Antriebseinrichtung, der gleichzeitig auch als Schwenkachse dient, wären Ausführungen mit geringem Spiel auch nicht möglich.

Aufgabe der Erfindung ist es, ein Schneidwerkzeug, das insbesondere zur Erzeugung großer Kräfte geeignet ist, zu schaffen, wobei ein geringes Spiel zwischen den Schneidmessern realisierbar ist.

Die Lösung der Aufgabe erfolgt erfindungsgemäß durch die Merkmale des Anspruchs 1.

Das erfindungsgemäße Schneidwerkzeug weist zwei Hebelelemente auf. Die beiden Hebelelemente weisen jeweils ein vorderes, von der Antriebseinrichtung wegweisendes Ende auf. An dem vorderen Ende sind entweder Schneidmesser ausgebildet oder Schneidmesseraufnahmen vorgesehen. An den hinteren Enden der Hebelelemente sind Kraftübertragungsflächen zur Kraftübertragung von der elektrischen oder hydraulischen Antriebseinrichtung auf die Hebelelemente ausgebildet. Die beiden Hebelelemente sind über einen Schwenkbolzen miteinander verbunden. Um den Schwenkbolzen folgt beim Schneiden sowie auch beim Öffnen das Verschenken der beiden Hebelelemente. Erfindungsgemäß ist zusätzlich zu dem Schwenkbolzen, in einem Abstand zu diesem, ein Aufnahmeelement vorgesehen. Das Aufnahmeelement dient zur Aufnahme eines mit der Antriebseinrichtung, insbesondere der Werkzeugaufnahme der Antriebseinrichtung, vorkommenden Halteelemente. Erfindungsgemäß ist somit das Verbinden des Schneidwerkzeugs mit der Antriebseinrichtung von dem Schwenken getrennt. Die Verbindung der Antriebseinrichtung erfolgt über das Halteelement und das Verschenken der Hebelelemente erfolgt um eine durch den Schwenkbolzen ausgebildete Schwenkachse. Dies hat den erfindungsgemäßen Vorteil, dass das Spiel zwischen den beiden Hebelelementen exakt festgelegt oder eingestellt werden kann, da das Spiel am Schwenkbolzen definiert und unabhängig von dem Aufnahmeelement und dem mit der Antriebseinrichtung verbundenen Halteelement ist.

Vorzugsweise ist ein einziger Schwenkbolzen vorgesehen um den beide Hebelelemente verschwenkbar sind. Der Schwenkbolzen ist hierbei vorzugsweise auf einer Werkzeugmittellinie, die insbesondere mit einer Mittellinie der Antriebseinrichtung zusammenfällt, angeordnet. Ebenso ist das Aufnahmeelement und somit auch das Halteelement auf derselben Werkzeugmittellinie angeordnet. Das Halteelement und der Schwenkbolzen sind somit in Längsrichtung des Schneidwerkzeugs hintereinander angeordnet. Hierdurch ist ein einfacher Aufbau des Schneidwerkzeugs realisiert.

Bei einer besonders bevorzugten Weiterbildung der Erfindung ist der Schwenkbolzen mit einem Justageelement zur Spieleinstellung verbunden. Da der Schwenkbolzen unabhängig von dem Aufnahme- und dem Halteelement ist, kann erfindungsgemäß an dem Schwenkbolzen ein Justageelement vorgesehen bzw. mit diesem verbunden sein. Dies hat den Vorteil, dass auf einfache Weise das Spiel eingestellt bzw. nachgestellt werden kann. Hierdurch kann eine durch den Gebrauch erfolgte Verstellung des Spiels oder eine Veränderung des Spiels aufgrund von Verschleiß auf einfache Weise ausgeglichen werden.

Der Schwenkbolzen weist vorzugsweise einen Anlagekopf auf, der mit einem der beiden Hebelelemente zusammenwirkt. Insbesondere liegt eine vorzugsweise ebene Unterseite des Anlagekopfs an einer ebenfalls vorzugsweise ebenen Außenseite des entsprechenden Hebelelements an. Dem Anlagekopf gegenüberliegend weist der Schwenkbolzen eine Aufnahme zur verstellbaren Aufnahme des Justageelements auf. Bei der Aufnahme handelt es sich vorzugsweise um ein Gewinde, auf das ein als Mutter ausgebildetes Justageelement aufschraubbar ist. Durch Drehen der Mutter ist somit auf einfache Weise ein stufenloses Einstellen des Spiels möglich. Die Mutter kann über ein gesondertes Fixierelement in ihrer Stellung fixiert werden. Vorzugsweise ist die Mutter als selbstsichernde Mutter ausgebildet.

Das Aufnahmeelement, das zur Aufnahme eines mit der Antriebseinrichtung verbundenen Halteelements, wie einem Haltebolzen, dient, ist vorzugsweise in mindestens einer, vorzugsweise zwei, Haltelaschen ausgebildet. Die beiden Haltelaschen sind mit den Hebelelementen verbunden, wobei die Verbindung der Haltelaschen mit den Hebelelementen vorzugsweise über den Schwenkbolzen erfolgt. Hierzu kann die mindestens eine Haltelasche eine Ausnehmung aufweisen, durch die der Schwenkbolzen hindurchgeführt ist. Insbesondere handelt es sich bei der Ausnehmung um eine runde Öffnung, durch die der Schwenkbolzen hindurch gesteckt ist. Die vorzugsweise zwei Haltelaschen weisen als Aufnahmeelement jeweils eine Öffnung auf. Durch diese kann das Halteelement, bei dem es sich insbesondere um einen Haltebolzen handelt, gesteckt werden. Zur Verbindung mit der Antriebseinrichtung weist diese vorzugsweise ebenfalls Öffnungen oder Ausnehmungen auf, durch die das Halteelement gesteckt ist.

Da über das Halteelement, wie den Haltebolzen, auf die Aufnahmeelemente hohe Kräfte übertragen werden, sind die beiden Haltelaschen vorzugsweise über mindestens ein Verbindungselement miteinander verbunden. Besonders bevorzugt ist es, als Verbindungselement eine hohle Verbindungshülse vorzusehen, die zwischen den beiden als Öffnungen ausgebildeten Aufnahmeelementen angeordnet ist. Ein Haltebolzen wird sodann durch die beiden Aufnahmeelemente sowie durch die Verbindungshülse gesteckt.

Das vorzugsweise vorgesehene die beiden Haltelaschen verbindende Verbindungselement dient insbesondere zur Ausrichtung der Haltelaschen zueinander. Durch das insbesondere als Verbindungshülse ausgebildete Verbindungselement ist ein Verdrehen oder Verschwenken der Haltelaschen zueinander um den Schwenkbolzen vermieden. Des Weiteren weist das Vorsehen des Verbindungselements den Vorteil auf, dass eine gleichmäßige Krafteinleitung gewährleistet ist.

In einer besonders bevorzugten Weiterbildung der Erfindung weisen die vorzugsweise zwei Haltelaschen eine Zusatzfunktion auf. Diese besteht in einer Kraftaufnahme, die beim Schneiden beispielsweise durch Verbiegen oder Verformen der Hebelelemente erfolgt. Hierzu liegen vorzugsweise beide Haltelaschen an Außenseiten der Hebelelemente an. Hierbei ist es besonders bevorzugt, dass die Haltelaschen derart ausgebildet sind, dass möglichst große Anlageflächen zur Kraftaufnahme vorgesehen sind. Hierzu weisen die beiden Haltelaschen jeweils mindestens einen Ansatz auf, der ähnlich eines Flügels, einen Teil des Halteelements überdeckt. Ferner sind die beiden Haltelaschen vorzugsweise identisch bzw. spiegelbildlich zueinander ausgebildet, so dass die Kraftaufnahme weiter verbessert ist.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht eines mit einer Antriebseinrichtung verbundenen erfindungsgemäßen Schneidwerkzeugs,
- Fig. 2: eine schematische Schnittansicht des Schneidwerkzeugs in offenem Zustand,
- Fig. 3: eine schematische Schnittansicht des Schneidwerkzeugs in geschlossenem Zustand,
- Fig. 4: eine schematische Explosionszeichnung der Einzelteile des Schneidwerkzeugs,

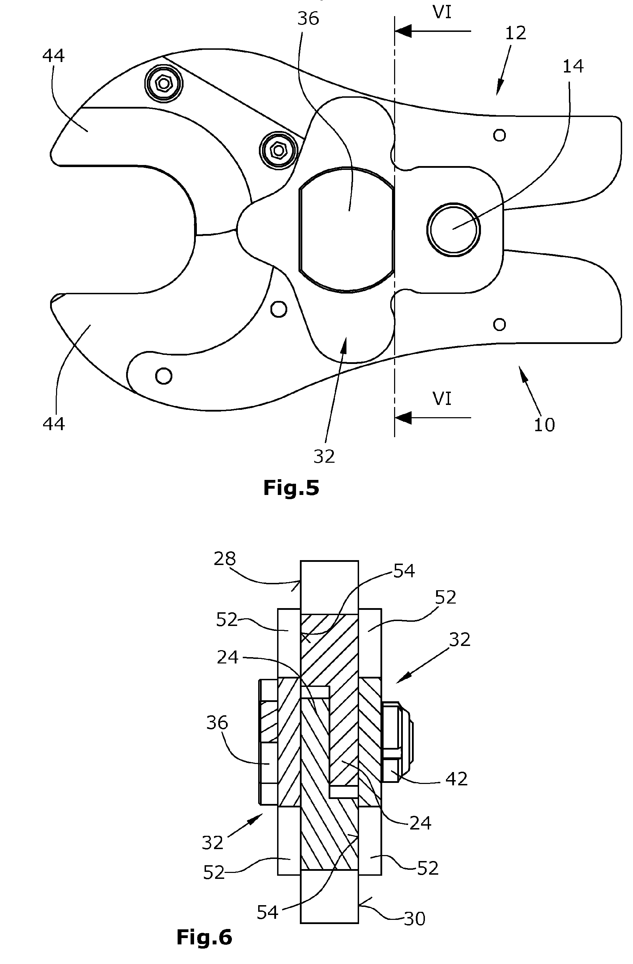

- Fig. 5: eine schematische Draufsicht des Schneidwerkzeugs und
- Fig. 6: eine schematische Schnittansicht entlang der Linie VI - VI in Fig. 5.

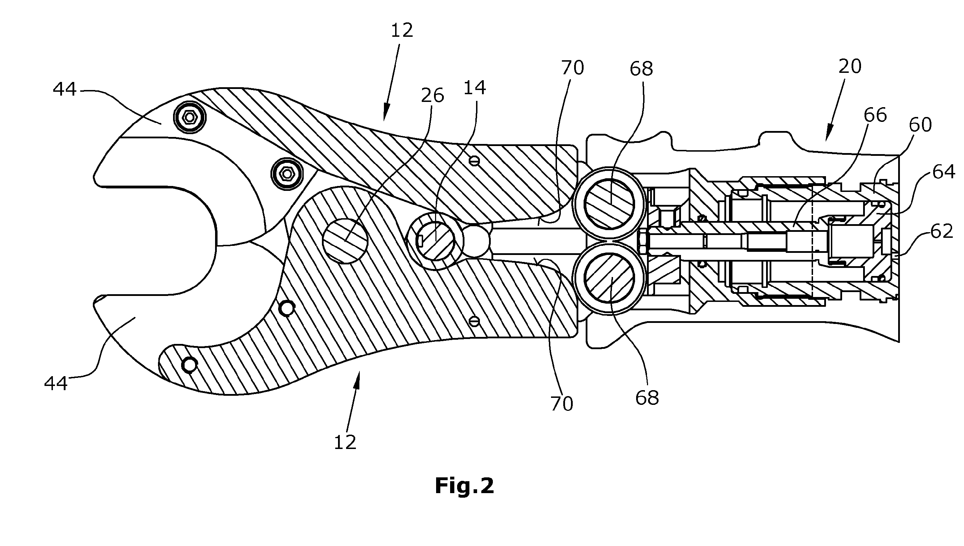

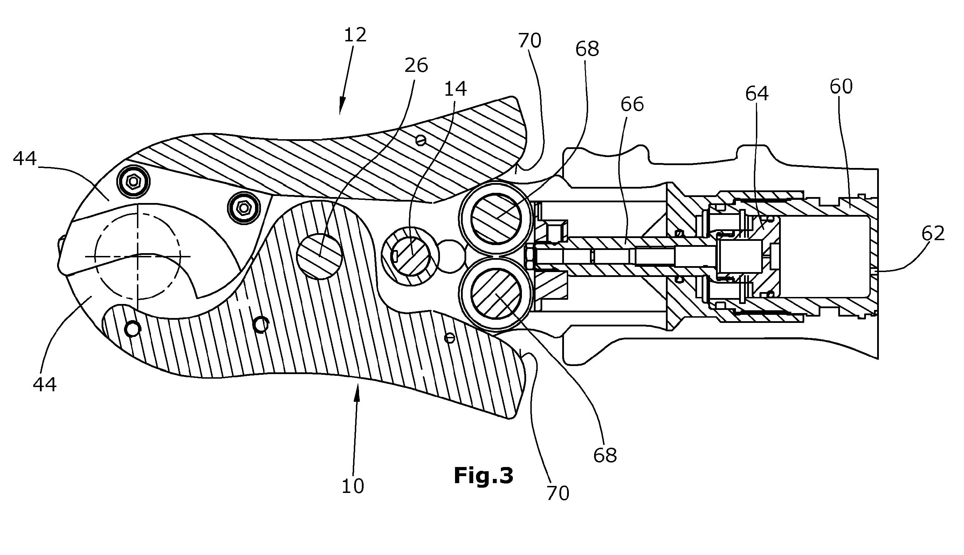

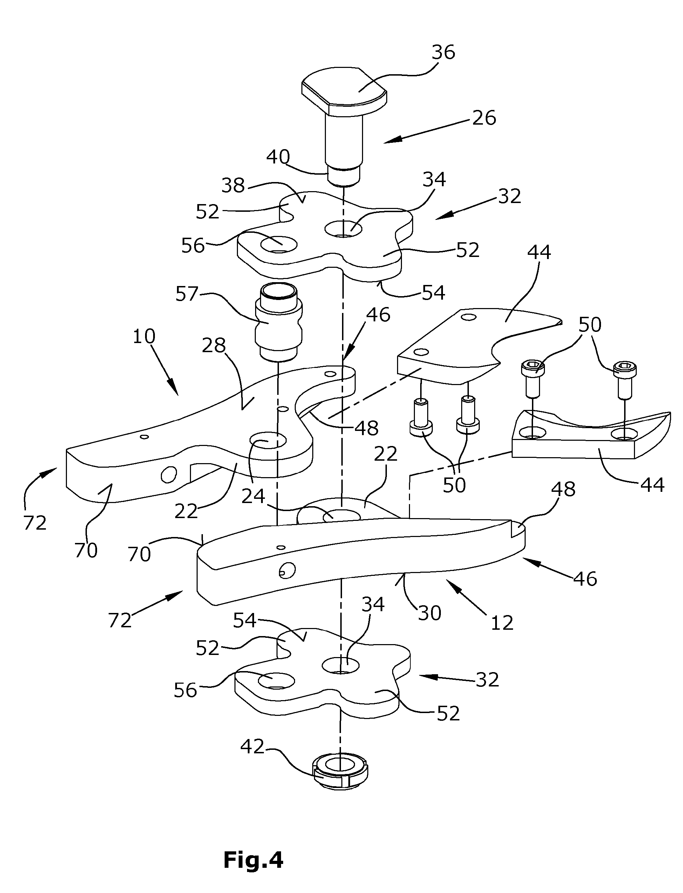

Das erfindungsgemäße Schneidwerkzeug weist zwei Schneidhebel 10, 12 auf und ist über ein Halteelement, wie einen Haltebolzen 14 mit einer Werkzeugaufnahme 16 einer Antriebseinrichtung 20 verbunden. Die beiden Hebelelemente 10, 12 weisen jeweils einen Fortsatz 22 (Fig. 4) auf. Die beiden Fortsätze 22 überlappen einander in montiertem Zustand und sind etwa halb so dick wie das übrige Hebelelement. Die beiden Fortsätze 22 weisen jeweils eine Durchgangsöffnung 24 auf, wobei die beiden Durchgangsöffnungen 24 in montiertem Zustand koaxial zueinander angeordnet sind. Durch die beiden Durchgangsöffnungen 24 ist zum Verbinden der beiden Halteelemente 10, 12 ein Schwenkbolzen 26 gesteckt. Um den Schwenkbolzen 26 sind die beiden Hebelelemente 10, 12 zwischen einem geöffneten Zustand (Fig. 2) und einem geschlossenen Zustand (Fig. 3) verschwenkbar.

Ferner sind zwei an Außenseiten 28 bzw. 30 der Hebelelemente 10, 12 anliegende Haltelaschen 32 vorgesehen. Die beiden Haltelaschen 32 weisen jeweils eine Durchgangsöffnung 34 auf, die in montiertem Zustand ebenfalls koaxial zu den Durchgangsöffnungen 24 ist. Durch die beiden Durchgangsöffnungen 34 wird ebenfalls der Schwenkbolzen geführt. Der Schwenkbolzen 26 weist einen Anlagekopf 36 auf, wobei eine Unterseite des Anlagekopfs 36 an einer in Richtung des Anlagekopfs 36 weisenden Außenseite 38 einer der beiden Haltelaschen 32 anliegt. Das dem Anlagekopf gegenüberliegende Ende des Schwenkbolzens 26 weist eine, im dargestellten Ausführungsbeispiel als Gewinde ausgebildete, Aufnahme 40 auf. Mit dem Gewinde 40 ist in montiertem Zustand ein als Mutter 42 ausgebildetes Justageelement verbunden. Bei dem Justageelement 42 handelt es sich in bevorzugter Ausführungsform um eine selbstsichernde Mutter. Mit Hilfe der Mutter 42 kann somit das Spiel zwischen den beiden Fortsätzen 22 der Hebelelemente 10, 12 eingestellt werden. Hierdurch ist es möglich, das Spiel zwischen zwei Schneidmessern 44 einzustellen. Die Schneidmesser 44 sind mit jeweils an den vorderen Enden 46 der Hebelelemente 10, 12 angeordneten Schneidmesseraufnahmen 48 verbunden. Die Verbindung erfolgt beispielsweise über in entsprechende Gewindebohrungen einschraubbare Schrauben 50.

Die Haltelaschen 32 weisen im dargestellten Ausführungsbeispiel jeweils zwei insbesondere flügelförmig ausgebildete Ansätze 52 auf. Die beiden Ansätze 52 dienen jeweils zur Vergrößerung einer Anlagefläche 54. Die Anlageflächen 54 liegen an den Außenseiten 28, 30 der Hebelelemente 10, 12 an. Hierdurch ist eine vergrößerte Kraftaufnahmefläche zwischen den Hebelelemente 10, 12 und den Haltelaschen 32 realisiert. Die Kraftaufnahmeflächen dienen insbesondere zur Aufnahme von Kräften während des Schneidens, die aufgrund von Verformungen der Hebelelemente 10, 12 auftreten.

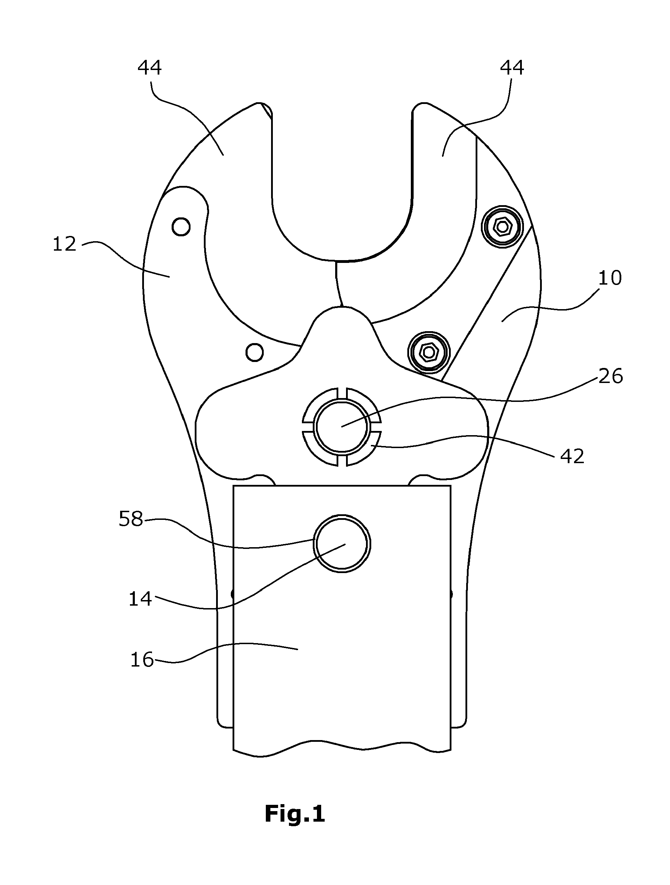

Zur Verbindung des Schneidwerkzeugs mit einer Werkzeugaufnahme 16 der Antriebseinrichtung 20 ist in den beiden Laschen 32 ein Aufnahmeelement ausgebildet. Im dargestellten Ausführungsbeispiel weist das Aufnahmeelement zwei Durchgangsöffnungen 56 auf, durch die in montiertem Zustand, der Haltebolzen 14 geführt ist. Der Haltebolzen 14 ist ferner in Ausnehmungen 58 (Fig. 1) der Werkzeugaufnahme 16 angeordnet.

Zwischen den beiden Öffnungen 56, die das Aufnahmeelement ausbilden, ist in bevorzugter Ausführungsform ein Verbindungselement in Form einer hohlen Verbindungshülse 57 angeordnet. Die beiden Enden der Verbindungshülse 57 sind hierbei vorzugsweise in die Öffnungen 56 eingesteckt. Der Haltebolzen wird durch die Öffnungen 56 sowie auch durch die Hülse 57 geführt.

Die Antriebseinrichtung 20 weist einen Hydraulikzylinder 60 (Fig. 2, 3) auf, der über eine Zuführleitung 62 mit einer nicht dargestellten Hydraulikpumpe verbunden ist, wobei die Hydraulikpumpe vorzugsweise über einen Elektromotor angetrieben wird. In dem Hydraulikzylinder 60 ist ein Kolben 64 angeordnet. Eine mit dem Kolben 64 verbundene Kolbenstange 66 ist im dargestellten Ausführungsbeispiel mit zwei Rollköpfen 68 verbunden. Die beiden Rollköpfe 68 liegen an Kraftübertragungsflächen 70 an. Die beiden Kraftübertragungsflächen 70 sind an den Innenseiten der hinteren Enden 72 der beiden Hebelelemente 10, 12 ausgebildet.

Durch Zuführen von Hydraulikfluid in den Hydraulikkolben 60 erfolgt ein Verschieben des Hydraulikzylinders 64 aus der Offenstellung (Fig. 2) in die Geschlossenstellung (Fig. 3). Durch derartiges Verschieben des Kolbens 64 in Fig. 2 nach links werden auch die über die Kolbenstange 66 mit dem Kolben 64 verbundenen Rollenköpfe 68 nach links verschoben. Hierdurch werden die beiden hinteren Enden 62 der Hebelelemente 10, 12 auseinander gedrückt. Dies bewirkt ein Verschwenken der beiden Hebelelemente 10, 12 um den Schwenkbolzen 26 und somit ein Schließen der Schneidmesser 44 (Fig. 3). Um beispielsweise beim Schneiden von Kabeln ein Beschädigen der Kabelisolierung zu vermeiden, weisen die Schneidmesseraufnahmen 48 eine bogenförmige Aussparung auf. Hierdurch kommt das Kabel bei geschlossenen Hebelelementen 10, 12 (Fig. 3) mit den Schneidmessern 14 in Berührung. Die Isolierung stößt nicht an die Schneidmesseraufnahmen 48.

## Patentansprüche

1. Schneidwerkzeug, insbesondere zur Erzeugung großer Schneidkräfte, mit
zwei Hebelelementen (10, 12) an deren vorderen Enden (46) Schneidmesseraufnahmen (48) oder Schneidmesser und an deren hinteren Enden (72) Kraftübertragungsflächen (70) zur Kraftübertragung von einer elektrischen und/oder hydraulischen Antriebseinrichtung (20) auf die Hebelelemente (10, 12) ausgebildet sind,
einem die beiden Hebelelemente (10, 12) miteinander verbindenden Schwenkbolzen (26) um den die beiden Hebelelemente (10, 12) zum Schneiden verschenkbar sind und
einem in einem Abstand zum Schwenkbolzen (26) angeordneten Aufnahmeelement (56) zur Aufnahme eines mit der Antriebseinrichtung (20) verbundenen Halteelements (14).

2. Schneidwerkzeug nach Anspruch 1, **dadurch gekennzeichnet, dass** ein einziger Schwenkbolzen (26) vorgesehen ist, der vorzugsweise auf einer Werkzeugmittellinie angeordnet ist.

3. Schneidwerkzeug nach Anspruch 1 oder 2, **gekennzeichnet durch** ein mit dem Schwenkbolzen (26) verbundenes Justageelement (42) zur Spieleinstellung.

4. Schneidwerkzeug nach Anspruch 3, **dadurch gekennzeichnet, dass** der Schwenkbolzen (26) einen mit einem der Halteelemente (10) zusammenwirkenden Anlagekopf (36) und eine dem Anlagekopf gegenüberliegende Aufnahme (40) zur verstellbaren Aufnahme des Justageelements (42) aufweist.

5. Schneidwerkzeug nach Anspruch 4, **dadurch gekennzeichnet, dass** die Aufnahme als Gewinde (40) und das Justageelement als Mutter (42) ausgebildet ist.

6. Schneidwerkzeug nach Anspruch 1 bis 5, **dadurch gekennzeichnet, dass** das Aufnahmeelement (56) in mindestens einer vorzugsweise zwei Haltelaschen (32) ausgebildet ist, die mit den Hebelelementen (10, 12) verbunden sind.

7. Schneidwerkzeug nach Anspruch 6, **dadurch gekennzeichnet, dass** die mindestens eine Haltelasche (32) über den Schwenkbolzen (26) mit den Hebelelementen (10, 12) verbunden ist.

8. Schneidwerkzeug nach Anspruch 6 oder 7, **dadurch gekennzeichnet, dass** die mindestens eine Haltelasche (32) zur Ausbildung des Aufnahmeelements eine Öffnung (56) aufweist, in die das Halteelement (14) einsteckbar ist.

9. Schneidwerkzeug nach Anspruch 6 bis 8, **dadurch gekennzeichnet, dass** die zwei Haltelaschen (32) über ein insbesondere als hohle Verbindungshülse (57) ausgebildetes Verbindungselement miteinander verbunden sind.

10. Schneidwerkzeug nach Anspruch 6 bis 9, **dadurch gekennzeichnet, dass** die beiden Haltelaschen (32) zur Kraftaufnahme an Außenseiten (28, 30) der Hebelelemente (10, 12) anliegen.

11. Schneidwerkzeug nach Anspruch 10, **dadurch gekennzeichnet, dass** mindestens eine vorzugsweise beide Haltelaschen (32) mindestens einen Ansatz (52) zur Vergrößerung der Kraftaufnahme dienenden Auflageflächen (54) aufweist.

12. Schneidwerkzeug nach Anspruch 1 bis 11, **dadurch gekennzeichnet, dass** die Hebelelemente (10, 12) jeweils einen Fortsatz (22) zur Aufnahme des Schwenkbolzens (26) aufweisen, wobei sich die Fortsätze (22) zumindest teilweise überdecken.
